# EUROPÄISCHE PATENTSCHRIFT

(11) **EP 2 732 739 B1**
(45) Veröffentlichungstag und Bekanntmachung des Hinweises auf die Patenterteilung: **17.04.2019**
(21) Anmeldenummer: 13190252.0
(22) Anmeldetag: 25.10.2013
(51) Int. Cl.: A47J 31/36, A47J 31/44, A47J 31/60

(54) **Kaffeevollautomat mit entnehmbarer Spindelbrüheinheit**
Fully automatic coffee machine having a removable spindle brewing unit
Machine à café entièrement automatique dotée d'une unité d'infusion amovible

(30) Priorität: 14.11.2012 DE 102012220753
(43) Veröffentlichungstag der Anmeldung: 21.05.2014
(73) Patentinhaber: BSH Hausgeräte GmbH, 81739 München (DE)
(72) Erfinder: Beck, Rudolf, 84518 Garching a. d. Alz (DE); Huber, Michael, 6341 Ebbs (AT); Strobl, Robert, 83246 Unterwössen (DE)

(56) Entgegenhaltungen:
- EP-A1- 0 528 759
- EP-A1- 2 196 115
- EP-A1- 2 213 210
- DE-U1-202007 001 174
- WMF: "WMF 1000 Bedienungsanleitung", , Mai 2006 (2006-05), XP002718781, Gefunden im Internet: URL:http://www.kaffeevollautomaten.org/kaf feemaschinen/wmf/282_wmf_1000/downloads/BA L_WMF1000.pdf [gefunden am 2014-01-15]

## Beschreibung

Die Erfindung betrifft einen Kaffeevollautomaten umfassend eine Spindelbrüheinheit mit einer Brühvorrichtung, eine mit einer Abtriebswelle eines Motors gekoppelte Gewindespindel zum Antrieb der Brühvorrichtung und eine Entnahmeeinrichtung der Spindelbrüheinheit zu ihrer Entnahme aus dem Kaffeevollautomaten und zu ihrem Wiedereinsetzen in den Kaffeevollautomaten. Im Besonderen betrifft die Erfindung einen Kaffeevollautomaten für Haushaltszwecke, wie er zum Beispiel in Küchen aufgestellt und betrieben wird. Die Brühvorrichtung der Spindelbrüheinheit umfasst regelmäßig eine Brühkammer bzw. einen Brühzylinder, in die bzw. in den ein Kolben eingefahren werden kann. Die dafür notwendige Bewegung der Brühkammer und des Kolbens relativ zueinander kann von der Gewindespindel erzeugt werden, die der Motor antreibt. Insbesondere für Reinigungszwecke ist die Spindelbrüheinheit entnehmbar ausgebildet.

Kaffeevollautomaten mit einer Spindelbrüheinheit offenbaren zum Beispiel die EP 0 528 758 A1 und die EP 2 213 210 A1. Jene zeigt eine vertikal stehende Gewindespindel, diese eine horizontal liegende. Die Brüheinheiten der offenbarten Kaffeevollautomaten werden zu Reinigungszwecken in der Achsenrichtung der Gewindespindeln entnommen. Eine vertikale Entnahme kann für den Benutzer unkomfortabel sein. Eine horizontale Entnahme begegnet konstruktiven Schwierigkeiten.

Unter www.kaffeevollautomaten.org/kaffeemaschinen/wmf/282_wmf_1000/downloads-/BAL_WMF1000.pdf, Seite 45, wird die Entnahme einer Spindelbrüheinheit an einer seitlich angebrachten Klappe des Gehäuses eines Kaffeevollautomaten beschrieben. Dafür ist aus dem Gehäuse zunächst ein Schlitten auszufahren, von dem die Spindelbrüheinheit mit einer vertikalen Spindel vertikal und damit ebenfalls in der Richtung der Spindelachse abgenommen wird.

Der Erfindung liegt die Aufgabe zugrunde, einen Kaffeevollautomaten mit einer Spindelbrüheinheit insbesondere hinsichtlich der Entnahme der Spindelbrüheinheit aus dem Gehäuse des Kaffeevollautomaten zu vereinfachen.

Diese Aufgabe wird bei dem eingangs genannten Kaffeevollautomaten erfindungsgemäß dadurch gelöst, dass sich eine Entnahmerichtung der Spindelbrüheinheit ausschließlich orthogonal zur Drehachse der Gewindespindel erstreckt. Sie umfasst dazu erfindungsgemäß eine Entnahmeeinrichtung, die eine Entnahme der Spindelbrüheinheit quer zur Achsrichtung der Gewindespindel ermöglicht. Die Erfindung wendet sich damit davon ab, eine Spindelbrüheinheit zwingend in der Achsrichtung der Drehachse der Gewindespindel zu entnehmen. Sie verfolgt vielmehr das Prinzip, die Entnahmerichtung der Spindelbrüheinheit von der Achsrichtung der Gewindespindel zu entkoppeln. Damit gelingt es ihr, die Entnahme der Spindelbrüheinheit unabhängig von der Achsrichtung der Spindel an einer geeigneten Gehäuseseite des Kaffeevollautomaten zu ermöglichen. Sowohl bei einer vertikal als auch bei einer horizontal verlaufenden oder in einem dazwischen liegenden Winkel geneigt verlaufenden Spindel kann die Spindelbrüheinheit insbesondere an einer rechten oder linken Gehäuseseite des Kaffeevollautomaten entnehmbar sein. Sie muss insbesondere nicht mehr an einer Oberseite entnommen werden, wo häufig wegen Hoch- oder Hängeschränken einer Kücheneinrichtung kein Platz über dem Kaffeevollautomaten vorhanden ist. Auch eine Entnahme an einer Frontseite des Kaffeevollautomaten, die dem Bediener zugewandt ist, die Bedienungs- und Ausgabeeinrichtungen trägt und daher konstruktiv sehr aufwändig ist, kann damit entfallen. Die erfindungsgemäße Entnahmeeinrichtung kann folglich auch einfacher ausgestaltet sein als die der oben erwähnten "WMF 1000", die einen horizontal ausfahrbaren Schlitten umfasst, der den Motor zum Antrieb der Spindelbrüheinheit trägt, von dem sie vertikal nach oben abgenommen wird.

Die erfindungsgemäße Entnahmeeinrichtung der Spindelbrüheinheit, die dazu ausgebildet ist, eine Entnahme der Spindelbrüheinheit orthogonal zur Drehachse der Gewindespindel zu ermöglichen, bietet dagegen den Vorteil, dass die Spindelbrüheinheit seitlich aus dem Gehäuse des Kaffeevollautomaten entnommen werden kann, und zwar unabhängig von einer senkrechten, schrägen oder horizontalen Positionierung der Gewindespindel im Gehäuse des Kaffeevollautomaten. Dies erleichtert eine Bedienung des Kaffeevollautomaten, nämlich die Entnahme und das Wiedereinsetzen der Spindelbrüheinheit insbesondere bei eingeschränkten Platzverhältnissen an seinem Aufstellungsort.

Erfindungsgemäß weist der Kaffeevollautomat eine Rasteinrichtung mit einer vorspannbaren Feder zur Fixierung der Spindelbrüheinheit im Kaffeevollautomaten auf.

Vor einer Entnahme muss eine mechanische Kopplung der Gewindespindel von ihrem Antrieb gelöst werden, sofern er nicht mit entnommen wird. Eine (Teil-)Entnahme des Motors ist allerdings aufwändig und daher unerwünscht. Die Entnahmeeinrichtung kann deshalb erfindungsgemäß eine mechanisch lösbare Kopplungseinrichtung zwischen der Abtriebswelle des Motors und der Gewindespindel umfassen, die der Benutzer zur Entnahme und zum Einsetzen der Spindelbrüheinheit betätigen kann. Bei einer Entnahme der Spindelbrüheinheit kann die Abtriebswelle im Kaffeevollautomaten verbleiben. Die Kopplungseinrichtung kann prinzipiell an einem der beiden Enden der Gewindespindel angeordnet sein. Vorzugsweise sitzt sie an einem bezüglich ihrer Einbaulage oberen Ende der Gewindespindel. Dort ist sie in der Regel weniger anfällig für Verunreinigungen, zum Beispiel durch Kaffeepulver, so dass diese Position einen wartungsarmen Betrieb des Kaffeevollautomaten begünstigt.

Nach einer vorteilhaften Ausführungsform des Kaffeevollautomaten kann auch die Betätigungsrichtung der Kopplungseinrichtung orthogonal zur Drehachse der Gewindespindel verlaufen. Unter der Betätigungsrichtung ist nicht die Richtung einer Betätigungsbewegung des Benutzers zu verstehen, also etwa das Umlegen eines Hebels oder dergleichen. Die Betätigungsrichtung der Kopplungseinrichtung ist vielmehr die Bewegungsrichtung derjenigen Kopplungselemente bei ihrer Betätigung, die für eine (Entkopplung maßgeblich sind. Die Kopplungseinrichtung lässt sich mechanisch aktivieren bzw. lösen, indem zum Beispiel zwei komplementär ausgebildete Kopplungselemente miteinander ge- bzw. voneinander entkoppelt werden, beispielsweise zwei Kupplungselemente oder auch zwei Zahnräder, die miteinander in Eingriff bzw. außer Eingriff gebracht werden. Nach einer Entkopplung der Gewindespindel von der Abtriebswelle des Motors kann die Spindelbrüheinheit orthogonal zur Drehachse der Gewindespindel entnommen werden. Die erfindungsgemäße Ausgestaltungsform bietet den Vorteil, dass die Betätigungsrichtung der Kopplungseinrichtung und die Entnahmerichtung der Spindelbrüheinheit zusammenfallen und gemeinsam orthogonal zur Drehachse der Gewindespindel verlaufen können. Damit lassen sich die Kopplungseinrichtung und die Entnahmeeinrichtung derart aufeinander abstimmen, dass eine Entnahmebewegung der Spindelbrüheinheit gleichzeitig ihre mechanische Abkopplung bewirkt. Somit können eine Entnahme und eine Abkopplung der Spindelbrüheinheit vorteilhafterweise in einem einzigen bzw. gemeinsamen Bedienungsschritt erfolgen. Da der Entkopplungsvorgang vom Benutzer weitgehend unbemerkt ablaufen kann, vereinfacht diese Ausgestaltungsform die Bedienung des Kaffeevollautomaten. Sinngemäß verhält es sich auch beim Einkoppeln und dem Einsetzen der Spindelbrüheinheit.

Das Kupplungsprinzip der Kopplungseinrichtung kann auf Formschluss oder auf Kraftschluss beruhen. Kraftschluss kann zum Beispiel in der Form einer Reib(rad)kupplung realisiert sein. Weil die Kopplungseinrichtung ausschließlich bei stillstehender Abtriebswelle betätigt wird, kann sie nach einer weiteren vorteilhaften Ausführungsform formschlüssig und damit schlupffrei ausgebildet sein. Dadurch kann ein Drehmoment von der Abtriebswelle des Motors weitgehend verlustfrei auf die Gewindespindel übertragen werden. Dafür bieten sich beispielsweise eine Zahn- oder Klauenkupplung oder ein Zahnradgetriebe an. Ihre Betätigungsrichtung kann parallel oder orthogonal zur Achsenrichtung der Abtriebswelle bzw. der Gewindespindel ausgelegt sein.

Als eine mechanisch einfache Ausführungsform einer formschlüssigen Kopplungseinrichtung kann eine Klauenkupplung nach dem Prinzip eines Schraubendrehers und eines komplementären Schraubenkopfes verwandt werden. Die Abtriebswelle kann beispielsweise einen Kopf in Form eines Flachschlitz- oder Kreuzschlitzschraubendrehers aufweisen und die Gewindespindel einen einfach geschlitzten Kopf oder einen Kreuzschlitzkopf, wobei auch ein Flachschlitzschraubendreher in einen Schraubenkopf mit Kreuzschlitz passen kann. Eine derartige Kopplungseinrichtung bietet den Vorteil einer einfachen Herstellung, da sie mit einer geringen Zahl an Bauteilen realisierbar ist. Das Flachschlitzprinzip kann außerdem eine Betätigungsrichtung orthogonal zur Achsenrichtung der Abtriebswelle bzw. der Gewindespindel und damit eine Kombination der Betätigungsrichtung mit der Entnahmerichtung der Spindelbrüheinheit ermöglichen.

Vorzugsweise kann der erfindungsgemäße Kaffeevollautomat ein Zahnradgetriebe als Kopplungseinrichtung umfassen. Das Zahnradgetriebe kann mindestens zwei Zahnräder umfassen, die beispielsweise ein Stirnrad-, ein Kegelrad-, ein Kronrad- oder ein Schneckenradgetriebe bilden können. Das Stirnradgetriebe kann mit zwei Zahnrädern parallel verlaufende Drehachsen der Gewindespindel und der Abtriebswelle ermöglichen, mit drei Zahnrädern, eines davon beispielsweise als Zahnwelle, kann sogar eine koaxiale Anordnung der Gewindespindel und der Abtriebswelle ermöglichen. Ein drittes Zahnrad kann zusätzlich verschiebbar oder verschwenkbar ausgebildet sein, um eine Kopplung oder Entkopplung herzustellen. Die Auswahl des Getriebes kann von den herrschenden Platzverhältnissen bestimmt sein, weil die Achsen der Abtriebswelle und der Gewindespindel beim Stirnradgetriebe parallel bzw. koaxial, bei den übrigen genannten Getrieben dagegen in einem Winkel zueinander stehen. Jedenfalls bietet das Zahnradgetriebe den Vorteil, dass es bei der Drehmomentübertragung nur geringe Verluste durch Schlupf und Reibung hervorruft. Zudem kann die Entkopplung unkompliziert erfolgen, da zwei tangential aneinander anliegende Zahnräder, aber auch das Kronrad bzw. das Schneckenrad und das Spindelrad bzw. die Schnecke so angeordnet werden können, dass sie orthogonal zur Drehachse der Gewindespindel voneinander getrennt werden können. Die vielfältigen Ausführungsmöglichkeiten des Zahnradgetriebes begünstigen eine flexible Anordnung des Motors innerhalb des Gehäuses des Kaffeevollautomaten und ermöglichen damit eine Platz sparende und einfach bedienbare Gestaltung des Kaffeevollautomaten.

Nach einer weiteren bevorzugten Ausgestaltungsform kann die Kopplungseinrichtung ein Kopplungselement als Innenzahnwelle oder Keilnabe und ein Kopplungselement als Zahn- oder Keilwelle mit einer komplementären Außenverzahnung umfassen. Sie kann in Verbindung mit einem Zahnradgetriebe realisiert werden, dessen Achsen sich in einem Winkel schneiden. Das Zahnradgetriebe selbst fungiert dann nicht mehr als Kopplungseinrichtung, bleibt auch bei einer Entnahme der Spindelbrüheinheit gekoppelt und kann für eine orthogonale Lage der Betätigungsrichtung der Kopplungseinrichtung gegenüber der Achse der Gewindespindel sorgen. Das innenverzahnte Kopplungselement lässt sich durch eine Verschiebung in einer Betätigungsrichtung in seiner Achsrichtung entkoppeln. Die Innenverzahnung kann beispielsweise in der Schnecke des Schneckengetriebes oder in dem nicht an der Gewindespindel montierten Kegelrad des Kegelradgetriebes angeordnet sein. Sie erweist sich insofern als vorteilhaft, als sie eine formschlüssige, drehstarre Kupplung darstellt, die im Betrieb die geringsten Toleranzen der gekoppelten Kopplungselemente relativ zueinander bietet.

Einer alternativen Ausführungsform gemäß können die Entnahmeeinrichtung und insbesondere ihre mechanische Kopplungseinrichtung der Spindelbrüheinheit an der Abtriebswelle derart ausgebildet sein, dass sich eine Betätigungsrichtung der Kopplungseinrichtung parallel zur Drehachse der Gewindespindel erstreckt. Die mechanische Kopplungseinrichtung ist auch in dieser Ausgestaltungsform mechanisch lösbar ausgebildet. Damit kann die Abtriebswelle koaxial zur Spindeldrehachse angeordnet sein, zu der sich die Betätigungsrichtung parallel bzw. koaxial erstrecken kann. Eine koaxiale Anordnung der Abtriebswelle und der Gewindespindel bietet den Vorteil, dass eine Drehmomentumlenkung, beispielsweise durch ein Zahnradgetriebe, die dabei auftretenden Stützmomente und die damit verbundenen Übertragungsverluste entfallen. Denn der Wegfall einer Kraftumlenkung führt zu einem geringeren Lageraufwand und dadurch zu geringeren Reibungsverlusten in den Lagern. Die dadurch reduzierten Anforderungen an die Stabilität ermöglichen eine konstruktiv einfachere Gestaltung der Entnahmeeinrichtung.

Vorzugsweise kann die Kopplungseinrichtung eine axial verschiebbare Kupplungswelle mit einer Verzahnung umfassen, die in eine Verzahnung der Gewindespindel einerseits und der Abtriebswelle des Motors andererseits passt. Die Kupplungswelle stellt ein erstes Kopplungselement dar, das entweder an die Gewindespindel oder an die Abtriebswelle als dem zweiten Kopplungselement koppelbar ist und mit der Abtriebswelle oder der Gewindespindel dauerhaft gekoppelt bleibt. Eine Kopplung und Entkopplung zwischen der Abtriebswelle des Motors und der Gewindespindel kann durch ein paralleles bzw. koaxiales Verschieben der Kupplungswelle relativ zur Gewindespindel bzw. der Abtriebswelle über eine bestimmte Distanz hinweg erzielt werden. In einer ersten Verschiebeposition kann eine drehmomentschlüssige Kopplung der Kupplungswelle sowohl mit der Gewindespindel als auch mit der Abtriebswelle vorliegen. In einer zweiten Verschiebeposition kann die Kupplungswelle dagegen entweder mit der Abtriebswelle oder der Gewindespindel gekoppelt sein, sodass die Abriebswelle bei einer Betätigung des Motors leer drehen würde. Die Verschiebung der Kupplungswelle kann der Benutzer als Betätigung der Kopplungseinrichtung vornehmen.

Prinzipiell können sich die Verzahnungen der Gewindespindel einerseits und der Abtriebswelle andererseits voneinander unterscheiden, so dass die Kupplungswelle unterschiedliche Verzahnungen aufweist. Eine gleichartige Verzahnung dagegen kann Herstellungsvorteile bieten, wenn die Kupplungswelle ausschließlich entweder eine Außen- oder eine Innenverzahnung aufweist. Prinzipiell kann die Innenverzahnung an der Abtriebswelle, an der Gewindespindel oder an der Kupplungswelle angeordnet sein. Mit einer Innenverzahnung nur an der Kupplungswelle, die dann als Kupplungshülse zu bezeichnen ist und die auf einem Ende der Gewindespindel einerseits und auf einem freien Ende der Abtriebswelle andererseits aufgeschoben werden kann, kann eine besonders raumsparende und gedrungene Bauform der Kupplungsvorrichtung erreicht werden.

Geringen Platzbedarf ermöglicht auch eine Außenverzahnung ausschließlich auf der Kupplungswelle, die dann als Zahnwelle in einen hohlen, innenverzahnten und endseitigen Abschnitt der Gewindespindel einerseits und der Abtriebswelle andererseits verschiebbar eintauchen kann. Dafür ist eine geeignete axiale Länge der Verzahnung am kopplungsseitigen Ende der Gewindespindel, der Abtriebs- und der Kupplungswelle erforderlich. Die Kupplungswelle kann zur Entnahme der Spindelbrüheinheit quasi versenkt werden, so dass sie ein Ausziehen der Spindelbrüheinheit nicht behindert. Die Kupplungswelle lässt sich vorzugsweise gegen eine Federvorspannung verschieben, die die Kupplungswelle in ihre erste Verschiebeposition vorspannt.

Den geringsten Platzbedarf für die axial wirksame Kopplungseinrichtung erfordert eine weitere vorteilhafte Ausgestaltungsform der Erfindung, wonach die Kupplungswelle einseitig mittels einer stirnseitigen Planverzahnung an der Gewindespindel oder an der Abtriebswelle in der ersten Verschiebeposition koppelbar sein kann. Je nach Ausgestaltung der Zahnform kann dafür zusätzlich ggf. eine axiale Verspannung wie bei einer sog. Hirth-Verzahnung notwendig sein. Sie kann durch eine Federvorspannung in der Richtung der ersten Verschiebeposition bereitgestellt werden, die zum Entkoppeln überwunden werden muss. Die Federvorspannung kann jedenfalls für eine zuverlässige Kopplung vorgesehen sein, die ein versehentlich unterlassenes Aktivieren der Kopplungseinrichtung nach dem Einsetzen der Spindelbrüheinheit durch den Benutzer ausschließt. Die Planverzahnung erfordert nur einen geringen Verschiebeweg zur Entkopplung und lässt nur einen geringen Verschiebeweg der Kupplungswelle zur Kopplung zu. Dadurch kann die Kopplungseinrichtung besonders kompakt ausgebildet werden.

Der Einsatz der oben beschriebenen Kupplungswelle erweist sich aus mehreren Gründen als vorteilhaft: Indem sie ein Drehmoment von der Abtriebswelle des Motors koaxial auf die Gewindespindel überträgt, entfallen Getriebeverluste, die anderenfalls durch eine Drehmomentumlenkung und durch Lagerreibung entstehen würden. Außerdem kann eine Entkopplung der Kupplungswelle in einer Bewegungsrichtung koaxial zur Drehachse erfolgen. Dies erlaubt geringere Fertigungstoleranzen der Verzahnung, die eine Lärmreduzierung im Betrieb des Kaffeevollautomaten sowie eine geringere Abnutzung der Verzahnung bewirken. Schließlich ermöglicht die Kupplungswelle einen geringen Platzbedarf für die Kopplungseinrichtung, was zu einer gedrungenen Bauform des Kaffeevollautomaten beiträgt.

Reinigungsaspekte können beispielsweise für die Entscheidung maßgeblich sein, ob die Kupplungswelle innerhalb oder außerhalb der Spindelbrüheinheit gelagert wird, sodass sie bei einer Entnahme der Spindelbrüheinheit zusammen mit dieser aus dem Kaffeevollautomaten herausgenommen wird oder darin verbleibt.

Der erfindungsgemäße Kaffeevollautomat umfasst außerdem eine Vorrichtung zur Bedienung bzw. insbesondere zur Verschiebung der Kupplungswelle. Dazu kann er an der Kupplungswelle eine radial abstehende Scheibe oder eine mitdrehende Klauenmuffe ggf. für einen Hebelansatz als Betätigungshilfe oder eine aufwändigere Hebelmechanik aufweisen. Die Vorrichtung kann eine Arretierung oder Verrastung der Kupplungswelle nach einem Einsetzen der Spindelbrüheinheit in der ersten Verschiebeposition ermöglichen oder zumindest erleichtern.

In einer bevorzugten Ausführungsform des Kaffeevollautomaten kann die Gewindespindel relativ zu einer Aufstandsfläche des Kaffeevollautomaten senkrecht oder geneigt angeordnet sein. Die Neigung der Gewindespindel kann einen Neigungswinkel zur Aufstandsfläche zwischen 30° bis 90° einnehmen, beispielsweise 45°, 60° oder 80°. Sie kann vorteilhaft sein, um eine geringe Bauhöhe des Kaffeevollautomaten zu erzielen. Auch bei einer geneigten Spindel ermöglicht es die oben beschriebene Kopplungseinrichtung, dass der Benutzer die Spindelbrüheinheit in einer bequemen, im Wesentlichen horizontalen Entnahmerichtung durch eine seitliche Öffnung aus dem Gehäuse des Kaffeevollautomaten entnehmen kann.

Gemäß einer weiteren bevorzugten Ausführungsform der Erfindung kann der Kaffeevollautomat zumindest eine Fluidkupplung zwischen dem Gehäuse des Kaffeevollautomaten und der Spindelbrüheinheit umfassen, die in der Nähe der Kopplungseinrichtung angeordnet ist. Die Fluidkupplung stellt eine fluiddichte und lösbare Verbindung zwischen zwei Fluidleitungssegmenten dar, die in einer Wasserleitung zum Transport von Heißwasser in die Brühkammer und/oder in einer Kaffeeleitung zum Transport von Kaffee zu einer Ausgabeeinrichtung des Kaffeevollautomaten angeordnet sind. Eine Anordnung der Fluidkupplung in der Nähe der Kopplungseinrichtung erweist sich als vorteilhaft, weil sich Toleranzen in der Konstruktion der Brüheinheit einerseits und des Gehäuses des Kaffeevollautomaten andererseits zueinander weniger störend auswirken und eine Formänderung der gesamten oder einzelner Elemente der Spindelbrüheinheit während eines Brühvorgangs und/oder über die Lebensdauer des Kaffeevollautomaten hinweg mit geringerer Wahrscheinlichkeit zu einem Verhaken der Brüheinheit im Gehäuse des Kaffeevollautomaten führt. Daneben werden durch eine kompakte Anordnung der Schnittstellen zwischen der Brüheinheit einerseits und dem Gehäuse andererseits im Betrieb zwischen ihnen wirkende Kräfte und Momente, z. B. radiale Kräfte in der Bewegung von Zahnrädern, direkter übertragen, weshalb die Bauteile kleiner und damit Platz sparender ausgeführt werden können.

Unabhängig von der konkreten Ausgestaltung der Kopplungseinrichtung können die Entnahmeeinrichtung der Spindelbrüheinheit und das Gehäuse des Kaffeevollautomaten miteinander korrespondierende Mittel zur Vereinfachung der Bedienung der Spindelbrüheinheit umfassen. Dadurch kann sie der Benutzer entlang eines Bedienwegs leichter entnehmen und vor allem bequemer einsetzen. Dazu können Anlagekanten und/oder Führungsschienen vorgesehen sein, die einen Bedienweg der Spindelbrüheinheit entlang der Entnahmerichtung definieren. Bei nicht ausschließlich geradlinigem Bedienweg kann eine Kulisse den Bedienweg beschreiben. Sie kann die Spindelbrüheinheit am geräteseitigen Ende des Bedienwegs abwärts bewegen, um sie auf eine Kopplungseinrichtung aufzusetzen und die Gewindespindel mit ihrem Antrieb drehmomentenfest zu koppeln. Bei der Entnahme kann die Kulisse die Brüheinheit ggf. unter Zuhilfenahme eines Hebels geringfügig anheben, um sie zu entkoppeln. Bei der abwärts gerichteten Aufsetzbewegung auf die Kopplungseinrichtung kann ein Federelement vorgespannt werden, das die Entnahme der Brüheinheit in der Gegenrichtung unterstützt.

Eine Kulissenführung bietet sich bei einer weiteren alternativen Ausgestaltungsform für die Kopplungseinrichtung an, bei der ein Riemengetriebe zur Drehmomentenübertragung dient. Durch eine Spann- und Entspannvorrichtung kann ein Riemen zwischen der Abtriebswelle und der Gewindespindel nach dem Einsetzen der Spindelbrüheinheit gespannt bzw. vor ihrer Entnahme gelockert werden. Anschließend kann die Brüheinheit durch eine kulissengeführte Bedienbewegung aus dem Riemengetriebe gehoben oder herausgedreht werden.

Zusätzlich umfasst die Entnahmeeinrichtung erfindungsgemäß eine benutzerseitig lösbare Rasteinrichtung, die die Spindelbrüheinheit in ihrer Betriebsposition im Gehäuse hält. Sie ist vor allem dann erforderlich, wenn sie Querkräfte beispielsweise eines Zahnradgetriebes als Kopplungseinrichtung abstützen muss. Sie weist erfindungsgemäß außerdem eine vorspannbare Feder auf, die beim Einsetzen der Spindelbrüheinheit aktiviert wird und deren Entnahmebewegung unterstützt. Nach dem Lösen der Rasteinrichtung kann sie insbesondere das Entkoppeln von Fluidkupplungen erleichtern.

Das Prinzip der Erfindung wird im Folgenden anhand einer Zeichnung beispielshalber noch näher erläutert. Es zeigen
- Figur 1:: einen schematischen Querschnitt einer Kopplungseinrichtung an einer Spindelbrüheinheit eines Kaffeevollautomaten gemäß einer ersten Ausführungsform,
- Figur 2:: einen schematischen Ausschnitt einer Kopplungseinrichtung gemäß einer zweiten Ausführungsform,
- Figur 3:: einen vergleichbaren Ausschnitt einer Kopplungseinrichtung gemäß einer dritten Ausführungsform in einer ersten Position,
- Figur 4:: einen Ausschnitt einer Kopplungseinrichtung gemäß Figur 3 in einer zweiten Position.

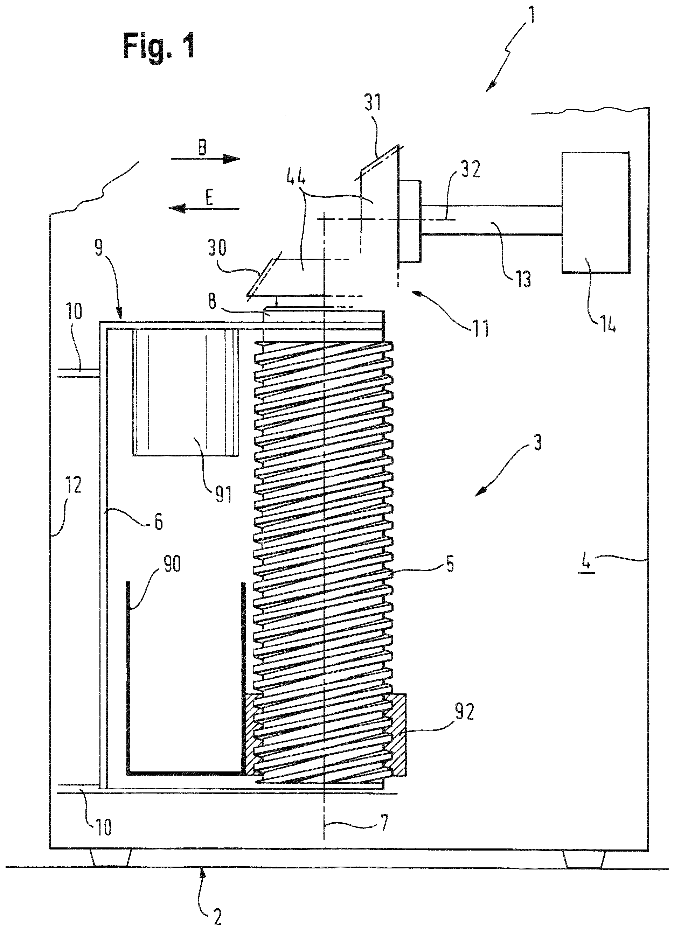

Figur 1 zeigt einen stark schematisierten Ausschnitt eines Kaffeevollautomaten 1, der auf einer horizontalen Aufstandsfläche 2 steht. Der Kaffeevollautomat 1 enthält in einem Gehäuse 4 eine Spindelbrüheinheit 3, die eine Brühvorrichtung 9 mit einer vertikalen Gewindespindel 5 aufweist. Die Gewindespindel 5 dient als Antrieb einer vertikal verfahrbaren Brühkammer 90, in die ein in die Brühkammer 90 passender feststehender Kolben 91 eintauchen kann. Die Gewindespindel 5 ist um eine Drehachse 7 drehbar in einem Gehäuse 6 der Spindelbrüheinheit 3 gelagert und steht senkrecht zur Aufstandsfläche 2 des Kaffeevollautomaten 1.

Die Spindelbrüheinheit 3 ist über eine Kopplungseinrichtung 11 mit einer Abtriebswelle 13 eines Motors 14 gekoppelt, der als Antrieb der Gewindespindel 5 dient. Die Kopplungseinrichtung 11 umfasst ein Winkelgetriebe aus zwei Kegelzahnrädern 30, 31, die mittels einer Außenverzahnung 44 rechtwinklig zueinander und drehmomentschlüssig miteinander in Eingriff stehen. Ein erstes Kegelrad 30 ist drehstarr an einem oberen Ende 8 der Gewindespindel 5 montiert. Die Drehachse 7 der Gewindespindel 5 steht damit senkrecht zur Drehachse 32 eines zweiten Kegelrades 31, das drehfest mit einer Abtriebswelle 13 eines Elektromotors 14 verbunden ist. Ein Verbindungsarm 92 der Brühkammer 90 als Spindelmutter kämmt mit der Gewindespindel 5. Eine Betätigung des Motors 14 führt zu einer Drehung der Gewindespindel 5 und damit zu einem Verfahren der Brühkammer 90 in einer Richtung senkrecht zur Aufstandsfläche 2 des Kaffeevollautomaten 1 bzw. parallel zur Drehachse 7.

Insbesondere zu Reinigungszwecken kann ein Benutzer die Spindelbrüheinheit 3 in einer Entnahmerichtung E aus dem Gehäuse 4 des Kaffeevollautomaten 1 entnehmen. Dazu verlegt er das Gehäuse 6 der Spindelbrüheinheit 3 entlang von Führungsschienen 10, in denen das Gehäuse 6 innerhalb des Gehäuses 4 gelagert ist. Die Führungsschienen 10 zusammen mit dem Gehäuse 6 stellen eine Entnahmeeinrichtung dar, die die Entnahmerichtung E der Spindelbrüheinheit 3 durch eine linke Seitenwand 12 des Gehäuses 4 hindurch definiert. Die Entnahmerichtung E steht senkrecht zur Drehachse 7 der Gewindespindel 5 und verläuft parallel zur Drehachse 32 des Motors 14. In einer entgegengesetzten Einsetz- bzw. Betätigungsrichtung B, die ebenfalls die Entnahmeeinrichtung definiert und die folglich ebenfalls parallel zur Drehachse 32 verläuft, stellt die Kopplungseinrichtung 11 eine drehmomentenschlüssige Verbindung der Spindelbrüheinheit 3 mit dem Motor 14 her. Die Betätigungsrichtung B ergibt sich als diejenige Richtung, in der die Außenverzahnungen 44 der Kegelräder 30, 31 miteinander in Eingriff gebracht werden, die Kopplungseinrichtung 11 also aktiviert wird. Beim Einsetzen der Spindelbrüheinheit 3 in das Gehäuse 4 dockt die Außenverzahnung 44 des ersten Kegelrads 30 ohne weiteres Zutun des Benutzers an dem zweiten Kegelrad 31 an. Damit geht die Entnahme der Spindelbrüheinheit 3 aus dem Gehäuse 4 und das Wiedereinsetzen der Spindelbrüheinheit 3 in den Kaffeevollautomaten 1 für den Benutzer unbemerkt mit einer Deaktivierung bzw. Aktivierung der Kopplungseinrichtung 11 einher.

Das Winkelgetriebe als Kopplungseinrichtung 11 entkoppelt die Richtung der Drehachse 7 der Gewindespindel 3 von der Richtung der Drehachse 32 der Abtriebswelle 13. Die Gewindespindel 3 und die Abtriebswelle 13 müssen dadurch nicht mehr koaxial zueinander verlaufen, sondern ihre Drehachsen 7, 32 kreuzen sich hier in einem rechten Winkel, den das Winkelgetriebe definiert. Durch seine zusätzliche Funktion als Kopplungseinrichtung 11 legt das Winkelgetriebe zugleich seine Betätigungsrichtung B für seine Aktivierung fest. Die Betätigungsrichtung B verläuft entgegengerichtet zur Entnahmerichtung E der Spindelbrüheinheit 3, in der die Kopplungseinrichtung 11 zugleich deaktiviert wird. Die Entnahmerichtung E verläuft orthogonal zur Drehachse 7 der Gewindespindel 5. Damit kann die Entnahme durch jede beliebige senkrechte Außenwand des Gehäuses 4 erfolgen. Die dadurch gewonnene größere Konstruktionsfreiheit kann dazu genutzt werden, die Entnahme an einer regelmäßig leicht zugänglichen und damit besonders bedienerfreundlichen Seitenwand an der rechten oder linken Seite des Kaffeevollautomaten 1, hier an der linken Seitenwand 12 zu ermöglichen.

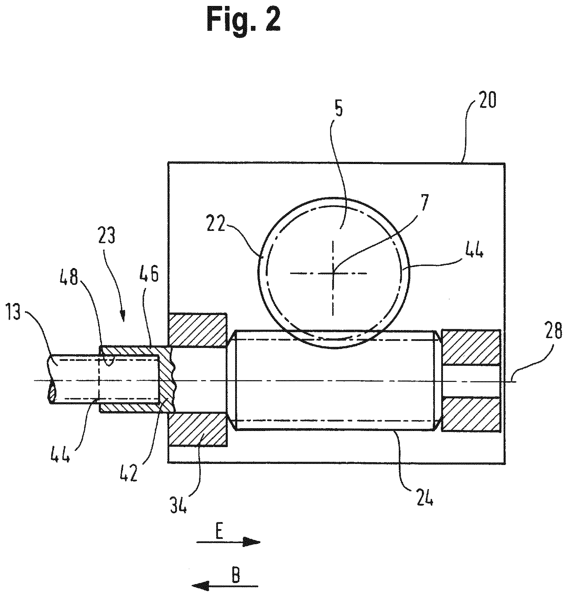

Die Figur 2 zeigt eine stark schematisierte Draufsicht auf ein alternatives Winkelgetriebe eines Kaffeevollautomaten 1. Die Draufsicht zeigt ein Schneckenrad 22, das auf dem oberen Ende 8 der Gewindespindel 5 montiert ist. Deren Drehachse 7 verläuft in Sichtrichtung. Die Gewindespindel 5 ist in einem Gehäuse 20 gelagert, an dem auch eine Schnecke 24 drehbar gelagert ist. Die Drehachse 28 der Schnecke 24 verläuft rechtwinklig zur Drehachse 7 der Gewindespindel 5 und des Schneckenrads 22, dessen Außenverzahnung 44 in die Schnecke 24 eingreift.

An ihrem linksseitigen Ende 42 geht die Schnecke 24 in eine Hohlwelle 46 mit einer Innenverzahnung 48 über, die jenseits eines Lagers 34 der Schnecke 24 geschnitten dargestellt ist. In die Hohlwelle 46 greift eine von einem Motor kommende und als Keilwelle mit einer Außenverzahnung 44 ausgebildete Abtriebswelle 13 ein. Die Hohlwelle 46 und die Abtriebswelle 13 stellen die Kopplungseinrichtung 23 dieser Ausgestaltungsform dar, die in einer Entnahmerichtung E deaktiviert und in einer Betätigungsrichtung B aktiviert wird.

Auch das Winkelgetriebe dieser Ausführungsform aus Schneckenrad 22 und Schnecke 24 führt zu einer Entnahmerichtung E der Spindelbrüheinheit 3 und zu einer Betätigungsrichtung B der Kopplungseinrichtung 23, die senkrecht zur Drehachse 7 der Gewindespindel 5 verlaufen. Die Ausführungsform erweist sich als vorteilhaft, weil eine Entnahme der Gewindespindel 5 aus dem und ihr Wiedereinsetzen in den Kaffeevollautomaten 1 für den Benutzer unbemerkt mit einer Betätigung der Kopplungseinrichtung 23 einhergehen, dabei aber das Winkelgetriebe nicht getrennt wird. Die Schnecke 24 und das Schneckenrad 22 lassen sich sogar als gekapselte Einheit fest an oder auf dem Gehäuse 20 ausführen, so dass es gegen Verschmutzung gut geschützt sein kann und auftretende Kräfte und Toleranzen leicht in den Griff zu bekommen sind. Mit der Abtriebswelle 13 als Keilwelle, die in die Hohlwelle 46 an der Schnecke 24 eingreift, lassen sich Toleranzen der Kopplungseinrichtung 23 ebenfalls äußerst gering halten. Durch die Drehachse 28 der Schnecke 24 werden also die Entnahmerichtung E bzw. die Betätigungsrichtung B gegenüber der Spindelachse 7 um 90° gedreht, so dass sie auf die Spindelachse 7 senkrecht stehen. Die Schnecke 24 kann an dem Gehäuse 20 tangential in beliebiger Richtung am Schneckenrad 22 angebracht sein, um je nach Anforderung eine Entnahme bzw. ein Einsetzen von rechts, links, vorn oder hinten bezüglich des Gehäuses eines Kaffeevollautomaten zu ermöglichen.

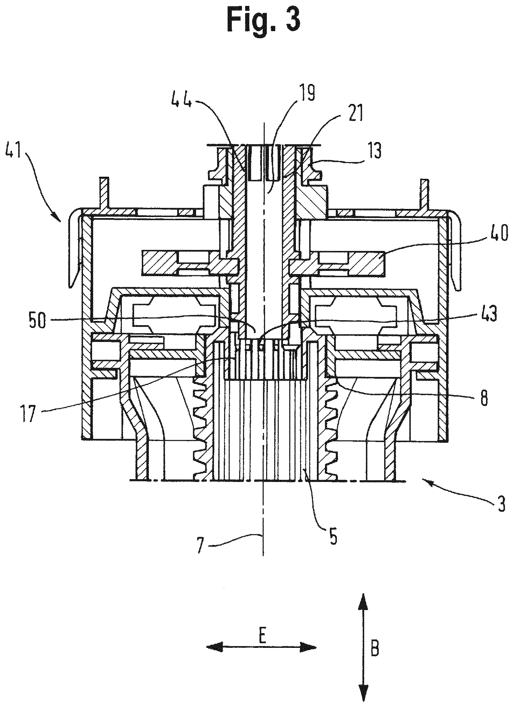

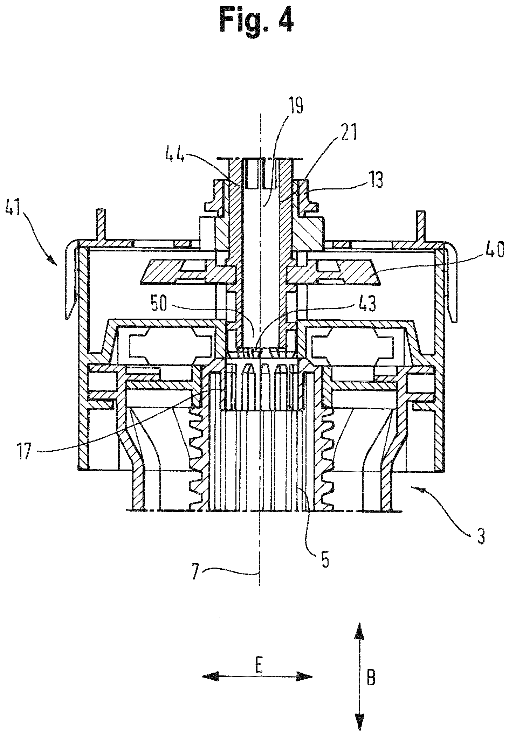

In den Figuren 3 und 4 ist eine weitere Ausführungsform einer Kopplungseinrichtung 41 in einer Schnittansicht dargestellt. Das obere Ende 8 der Gewindespindel 5 fluchtet koaxial mit einer Kupplungswelle 19, die oberhalb des oberen Endes 8 und um die gemeinsame Drehachse 7 drehbar und in ihrer Richtung verschiebbar angeordnet ist. An ihrem unteren Kopfende 50 ist die Kupplungswelle 19 als Keilwelle 43 ausgebildet, mit der sie formschlüssig und drehstarr an das obere Ende 8 der Gewindespindel 5 ankoppeln kann, die dort eine entsprechende Keilnabe 17 aufweist. Die Kupplungswelle 19 ist außerdem längsverschiebbar in einer hohlen Abtriebswelle 13 eines Motors gelagert, die die Kupplungswelle 19 an einem oberen Abschnitt umschließt. Eine Innenverzahnung 21 der hohlen Abtriebswelle 13 stellt eine drehstarre Kopplung mit einer Außenverzahnung 44 der Kupplungswelle 19 her. Die Kupplungswelle 19 verfügt über ein radial abstehendes und kranzförmig umlaufendes Bedienelement 40, an dem sie entlang ihrer Längsachse verschoben werden kann. Eine Drehmomentübertragung von einem Motor über die Abtriebswelle 13 und die Kupplungswelle 19 auf die Gewindespindel 5 erfolgt, wenn die Kupplungswelle 19 aus der deaktivierten Stellung der Kopplungseinrichtung 41 gemäß Figur 4 in eine aktivierte Stellung überführt wird. Dazu wird sie am Bedienelement 40 axial zum oberen Ende 8 der Gewindespindel 5 hin verschoben, bis ihre Keilwelle 43 in die Keilnabe 17 der Gewindespindel 5 eingreift (vgl. Figur 3). Damit ist ein Betriebszustand mit einer drehstarren Verbindung zwischen einem nicht dargestellten Motor und der Gewindespindel 5 hergestellt.

Die Keilnabe 17 der Gewindespindel 5 erweist sich hinsichtlich der Kriterien Kraftschluss, Lärmentwicklung und Abnutzung als besonders günstig. Indem die Gewindespindel 5, die Kupplungswelle 19 und die Abtriebswelle 13 eine gemeinsame Drehachse 7 haben, ergibt sich eine günstige koaxiale Drehmomentübertragung. Mangels Kraftumlenkung wie in einem Winkelgetriebe vermeidet die Kopplungseinrichtung 41 sowohl Drehmomentverluste und Betriebsgeräusche infolge Gleitens und Wälzens von Zahnrädern als auch einen zusätzlichen Konstruktionsaufwand für die Aufnahme von Lagerkräften der Zahnräder.

Der Benutzer kann eine axiale Verschiebestellung der Kupplungswelle 19 über das Bedienelement 40 manipulieren. Die Betätigungsrichtung der Kupplungswelle 19 und damit der Kopplungseinrichtung 41 verläuft folglich achsparallel zur Drehachse 7 der Gewindespindel 5. Für eine Entnahme der Spindelbrüheinheit 3 drückt er das Bedienelement 40 bis zu einem Anschlag von der Gewindespindel 5 weg, sodass ein Kraftschluss zwischen der Kupplungswelle 19 und der Gewindespindel 5 aufgehoben ist (vgl. Figur 4). In dieser Verschiebestellung der Kupplungswelle 19 kann der Benutzer die Spindelbrüheinheit 3 in einer Entnahmerichtung E aus dem Gehäuse des Kaffeevollautomaten 1 entnehmen, ohne dass ein Eingriff der Verzahnungen o.ä. zu einem Verhaken führt und die Entnahme behindert. Für eine Herstellung des Kraftschlusses drückt der Benutzer nach einem Wiedereinsetzen der Spindelbrüheinheit 3 in den Kaffeevollautomaten 1 das Bedienelement 40 bis zu einem Anschlag zur Gewindespindel 5 hin, wie es in der Figur 3 dargestellt ist. Diese Bewegung kann durch eine nicht dargestellte Feder unterstützt sein. Damit steht die Entnahmerichtung E der Spindelbrüheinheit 3 der Kopplungseinrichtung 41 senkrecht zur Drehachse 7 der Gewindespindel 5 - analog zu den oben beschriebenen Kopplungseinrichtungen 11, 23. Abweichend davon verläuft die Betätigungsrichtung B aber nicht parallel zur Entnahmerichtung E, sondern orthogonal zu ihr.

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Kopplungseinrichtungen in anderer Form als in der hier beschriebenen erfolgen, zum Beispiel als Reibrad- oder Riemengetriebe oder Klauenkupplung. Ebenso kann die Spindelbrüheinheit in einer anderen Form ausgestaltet sein, wenn dies aus Platzgründen bzw. designerischen Gründen notwendig ist. Schließlich schließt die Verwendung der unbestimmten Artikel "ein" bzw. "eine" nicht aus, dass die betreffenden Merkmale auch mehrfach bzw. mehrmals vorhanden sein können.

### Bezugszeichenliste

- 1: Kaffeevollautomat
- 2: Aufstandsfläche
- 3: Spindelbrüheinheit
- 4: Gehäuse des Kaffeevollautomaten 1
- 5: Gewindespindel
- 6: Gehäuse der Spindelbrüheinheit 3
- 7: Drehachse
- 8: oberes Ende der Gewindespindel 5
- 9: Brühvorrichtung
- 10: Führungsschienen
- 11: Kopplungseinrichtung
- 12: Seitenwand
- 13: Abtriebswelle
- 14: Motor
- 17: Keilnabe
- 19: Kupplungswelle
- 20: Gehäuse
- 21: Innenverzahnung
- 22: Schneckenrad
- 23: Kopplungseinrichtung
- 24: Schnecke
- 28: Drehachse
- 30: erstes Kegelrad
- 31: zweites Kegelrad
- 32: Drehachse
- 34: Lager der Schnecke 24
- 40: Bedienelement
- 41: Kopplungseinrichtung
- 42: linksseitiges Ende der Schnecke 24
- 43: Keilwelle
- 44: Außenverzahnung
- 46: Hohlwelle
- 48: Innenverzahnung
- 50: unteres Kopfende der Kupplungswelle 19
- 90: Brühkammer
- 91: Kolben
- 92: Verbindungsarm

- B: Betätigungsrichtung
- E: Entnahmerichtung

## Patentansprüche

1. Kaffeevollautomat (1), umfassend eine Spindelbrüheinheit (3) mit einer Brühvorrichtung (9) sowie eine mit einer Abtriebswelle (13) eines Motors gekoppelte Gewindespindel (5) zum Antrieb der Brühvorrichtung (9), und eine Entnahmeeinrichtung (10) der Spindelbrüheinheit (3) zu ihrer Entnahme aus dem und zu ihrem Wiedereinsetzen in den Kaffeevollautomaten (1), wobei die Entnahmeeinrichtung (10) ein Gehäuse (6) der Spindelbrüheinheit (3) und Führungsschienen (10) umfasst, und wobei die Entnahmeeinrichtung (10) eine Entnahmerichtung (E) der Spindelbrüheinheit (3) definiert, die sich ausschließlich orthogonal zu der Drehachse (7) der Gewindespindel (5) erstreckt, **gekennzeichnet durch** eine Rasteinrichtung mit einer vorspannbaren Feder zur Fixierung der Spindelbrüheinheit (3) im Kaffeevollautomaten (1).

2. Kaffeevollautomat nach Anspruch 1, mit einer mechanischen Kopplungseinrichtung (11; 23) der Spindelbrüheinheit (3) an der Abtriebswelle (13), **dadurch gekennzeichnet, dass** sich eine Betätigungsrichtung (B) der Kopplungseinrichtung (11; 23) orthogonal zur Drehachse (7) der Gewindespindel (5) erstreckt.

3. Kaffeevollautomat nach Anspruch 2, **gekennzeichnet durch** eine formschlüssige Ausbildung der Kopplungseinrichtung (11; 23).

4. Kaffeevollautomat nach Anspruch 3, **gekennzeichnet durch** ein Zahnradgetriebe (15) als Kopplungseinrichtung.

5. Kaffeevollautomat nach Anspruch 1, mit einer mechanischen Kopplungseinrichtung (41) der Spindelbrüheinheit (3) an der Abtriebswelle (13), **dadurch gekennzeichnet, dass** sich eine Betätigungsrichtung (B) der Kopplungseinrichtung (41) parallel zur Drehachse (7) der Gewindespindel (5) erstreckt.

6. Kaffeevollautomat nach dem obigen Anspruch, **gekennzeichnet durch** eine axial verschiebbare Kupplungswelle (19) als Kopplungselement mit einer Verzahnung, die in eine entsprechende Verzahnung der Gewindespindel (5) und in eine Innenverzahnung (17) der Abtriebswelle (13) des Motors als andere Kopplungselemente passt.

7. Kaffeevollautomat nach dem obigen Anspruch, **gekennzeichnet durch** eine hohle Ausformung der Gewindespindel oder der Abtriebswelle (13) sowie eine Vorrichtung zur Verschiebung der Kupplungswelle (19) in die Gewindespindel oder der Abtriebswelle (13) hinein.

8. Kaffeevollautomat nach einem der vorhergehenden Ansprüche, **dadurch gekennzeichnet, dass** die Gewindespindel (5) senkrecht oder geneigt relativ zu einer Aufstandsfläche (2) des Kaffeevollautomaten (1) angeordnet ist.

9. Kaffeevollautomat nach einem der vorhergehenden Ansprüche, **gekennzeichnet durch** zumindest eine Fluidkupplung zwischen dem Gehäuse des Kaffeevollautomaten (1) und der Spindelbrüheinheit (3), wobei die Fluidkupplung in der Nähe der Kopplungseinrichtung (11; 23; 41) angeordnet ist.

## Claims

1. Fully automatic coffee machine (1), comprising a spindle brewing unit (3) with a brewing apparatus (9) and a threaded spindle (5) coupled to an output shaft (13) of a motor for driving the brewing apparatus (9), and a removal device (10) of the spindle brewing unit (3) for removing it from and reinserting it into the fully automatic coffee machine (1), wherein the removal device (10) comprises a housing (6) of the spindle brewing unit (3) and guide rails (10), and wherein the removal device (10) defines a removal direction (E) of the spindle brewing unit (3) which extends purely orthogonally to the axis of rotation (7) of the threaded spindle (5), **characterised by** a latching device with a biasable spring for fixing the spindle brewing unit (3) in the fully automatic coffee machine (1).

2. Fully automatic coffee machine according to claim 1, having a mechanical coupling device (11; 23) of the spindle brewing unit (3) at the output shaft (13), **characterised in that** an actuation direction (B) of the coupling device (11; 23) extends orthogonally to the axis of rotation (7) of the threaded spindle (5).

3. Fully automatic coffee machine according to claim 2, **characterised by** a form-fit design of the coupling device (11; 23).

4. Fully automatic coffee machine according to claim 3, **characterised by** a gear mechanism (15) as a coupling device.

5. Fully automatic coffee machine according to claim 1, having a mechanical coupling device (41) of the spindle brewing unit (3) at the output shaft (13), **characterised in that** an actuation direction (B) of the coupling device (41) extends parallel to the axis of rotation (7) of the threaded spindle (5).

6. Fully automatic coffee machine according to the above claim, **characterised by** an axially displaceable coupling shaft (19) as a coupling element with a gearing that fits into a corresponding gearing of the threaded spindle (5) and into an inner gearing (17) of the output shaft (13) of the motor as other coupling elements.

7. Fully automatic coffee machine according to the above claim, **characterised by** a hollow moulding of the threaded spindle or of the output shaft (13) and an apparatus for the displacement of the coupling shaft (19) into the threaded spindle or of the output shaft (13).

8. Fully automatic coffee machine according to one of the preceding claims, **characterised in that** the threaded spindle (5) is arranged perpendicular or inclined relative to a support surface (2) of the fully automatic coffee machine (1).

9. Fully automatic coffee machine according to one of the preceding claims, **characterised by** at least one fluid coupling between the housing of the fully automatic coffee machine (1) and the spindle brewing unit (3), wherein the fluid coupling is arranged in the vicinity of the coupling device (11; 23; 41).

## Revendications

1. Machine à café intégralement automatique (1), comprenant une unité d'ébouillantage à broche (3) avec un dispositif d'ébouillantage (9) ainsi qu'une broche filetée (5) couplée à un arbre entraîné (13) d'un moteur pour l'entraînement du dispositif d'ébouillantage (9), et un moyen de retrait (10) de l'unité d'ébouillantage à broche (3) pour son retrait et sa réinsertion dans la machine à café intégralement automatique (1), dans laquelle le moyen de retrait (10) comprend un carter (6) de l'unité d'ébouillantage à broche (3) et des rails de guidage (10), et dans laquelle le moyen de retrait (10) définit un sens de retrait (E) de l'unité d'ébouillantage à broche (3) qui s'étend exclusivement orthogonalement à l'axe de rotation (7) de la broche filetée (5), **caractérisée par** un dispositif d'encliquetage avec un ressort pouvant être précontraint pour la fixation de l'unité d'ébouillantage à broche (3) dans la machine à café intégralement automatique (1).

2. Machine à café intégralement automatique selon la revendication 1, avec un moyen de couplage mécanique (11 ; 23) de l'unité d'ébouillantage à broche (3) à l'arbre entraîné (13), **caractérisée en ce qu'**un sens d'actionnement (B) du moyen de couplage (11 ; 23) s'étend orthogonalement par rapport à l'axe de rotation (7) de la broche filetée (5).

3. Machine à café intégralement automatique selon la revendication 2, **caractérisée par** une exécution par complémentarité de formes du moyen de couplage (11 ; 23).

4. Machine à café intégralement automatique selon la revendication 3, **caractérisée par** un engrenage (15) en guise de moyen de couplage.

5. Machine à café intégralement automatique selon la revendication 1, avec un moyen de couplage mécanique (41) de l'unité d'ébouillantage à broche (3) à l'arbre entraîné (13), **caractérisée en ce qu'**un sens d'actionnement (B) du moyen de couplage (41) s'étend parallèlement par rapport à l'axe de rotation (7) de la broche filetée (5).

6. Machine à café intégralement automatique selon la revendication précédente, **caractérisée par** un arbre de couplage (19) déplaçable axialement en guise d'élément de couplage avec une denture, correspondant à une denture correspondante de la broche filetée (5) et à une denture intérieure (17) de l'arbre entraîné (13) du moteur comme autre élément de couplage.

7. Machine à café intégralement automatique selon la revendication précédente, **caractérisée par** une forme creuse de la broche filetée ou de l'arbre entraîné (13) ainsi qu'un dispositif pour le déplacement de l'arbre de couplage (19) à l'intérieur de la broche filetée ou de l'arbre entraîné (13).

8. Machine à café intégralement automatique selon l'une des revendications précédentes, **caractérisée en ce que** la broche filetée (5) est disposée à la verticale ou de façon inclinée par rapport à une surface de pose (2) de la machine à café intégralement automatique (1).

9. Machine à café intégralement automatique selon l'une des revendications précédentes, **caractérisée par** au moins un couplage fluidique entre le carter de la machine à café intégralement automatique (1) et l'unité d'ébouillantage à broche (3), dans laquelle le couplage fluidique est disposé à proximité du moyen de couplage (11 ; 23 ; 41).
